# EUROPÄISCHE PATENTSCHRIFT

(11) **EP 1 581 084 B1**
(45) Veröffentlichungstag und Bekanntmachung des Hinweises auf die Patenterteilung: **03.10.2007**
(21) Anmeldenummer: 03767817.4
(22) Anmeldetag: 18.12.2003
(51) Int. Cl.: A47J 43/07

(54) **BECHERANORDNUNG FÜR EINE MISCHZERKLEINERUNGSVORRICHTUNG**
PITCHER ARRANGEMENT FOR A BLENDING DEVICE
SYSTEME DE RECIPIENT POUR MIXEUR

(30) Priorität: 30.12.2002 DE 10261367
(43) Veröffentlichungstag der Anmeldung: 05.10.2005
(73) Patentinhaber: BSH Bosch und Siemens Hausgeräte GmbH, 81739 München (DE)
(72) Erfinder: PAVLOVIC, Henrik, Ljubno ob Savin 3333 (SI); SEDOVSEK, Aleksander, 3330 Mozirje (SI); SEMEJA, Uros, 3327 Smartno ob Paki (SI); ZIBRET, Igor, 3327 Smartno ob Paki (SI)
(86) Internationale Anmeldenummer: PCT/EP2003/014470
(87) Internationale Veröffentlichungsnummer: WO 2004/058021

(56) Entgegenhaltungen:
- DE-B- 1 091 718
- GB-A- 2 238 466

## Beschreibung

Die Erfindung betrifft eine Becheranordnung für eine Mischzerkleinerungsvorrichtung gemäß Oberbegriff des Patentanspruchs 1.

Mischzerkleinerungsvorrichtungen für den Haushalt sind bekannt. Diese sog. Blender oder Mixer weisen ein Motorgehäuse mit einem elektrischen Antriebsmotor und einen auf eine Oberseite des Gehäuses aufsetzbaren Becher auf, in dessen unterem Bereich eine Werkzeugwelle um eine vertikale Achse rotieren kann. Der unten offene Becher kann zusammen mit einem Bodenbereich vom Gehäuse abgenommen werden, um den darin zuvor zerkleinerten und/oder fein durchmischten Inhalt in ein Gefäß entleeren zu können. Der Bodenbereich ist typischerweise als sog. Becherträger ausgestaltet, der den damit verbundenen Becher nach außen und zum Motor hin abdichtet und der gleichzeitig eine Halterung für die von einer Abtriebswelle des Antriebsmotor trennbare Werkzeugwelle bildet. Die Werkzeugwelle kann mittels eines im Schüsselträger fixierbaren und ein Gleitlager aufweisenden Lagerschilds zentriert sein. Eine solche gattungsgemäße Mischzerkleinerungsvorrichtung geht bspw. aus dem DE-GM 75 07 736 hervor. Eine weitere Mischzerkleinerungsvorrichtung, welche als nächstliegendes Stand der Technik angesehen wird, ist aus der DE 10 91 718 B bekannt.

Die bekannten Mischzerkleinerungsvorrichtungen sehen meist ein Außengewinde am ringförmigen unteren Bund des Bechers vor, das mit einem entsprechenden Innengewinde des Becherträgers zusammenwirkt. Da beim Einschrauben des Bechers meist ein eingelegter Dichtungsring komprimiert werden muss, ist die vollständig verriegelte Position nicht exakt definiert, sondern hängt in erster Linie von einem vom Benutzer aufgebrachten Drehmoment ab. Unter ungünstigen Bedingungen, insbesondere bei den während des Betriebs auftretenden Vibrationen kann dies zur Lockerung des Bechers und ggf. zu Undichtigkeiten und zum Austritt von Flüssigkeit führen.

Der vorliegenden Erfindung liegt die Aufgabe zu Grunde, eine zuverlässige und dichte Verbindung zwischen einem Becher und einer Mischzerkleinerungsvorrichtung zur Verfügung zu stellen.

Diese Aufgabe wird bei einer Becheranordnung für eine Mischzerkleinerungsvorrichtung mit den im Oberbegriff des Patentanspruchs 1 genannten Merkmalen durch die Merkmale des kennzeichnenden Teils gelöst, wobei bei montiertem Becher zwischen dem Becher und dem Becherträger eine Rasteinrichtung vorgesehen ist, mit der die Verbindungseinrichtung in ihrer Montageposition verrastbar ist. Somit weist der in den Becherträger einsetzbare bzw. einschraubbare Becher eine definierte Endlage auf, die durch korrespondierende Anschlag- bzw. Rasteinrichtungen definiert ist. Diese sind jeweils im Becherträger sowie am Becherfuß angeordnet und sorgen dafür, dass der Becher beim Einsetzen in den Becherträger immer gegen einen definierten Anschlag gedreht und dort verrastet werden kann. Diese definierte Endlage ist somit nicht mehr von einem Gefühl eines jeweiligen Benutzers abhängig. Sie verändert sich auch nicht mit der zunehmenden Alterung einer Dichtung, die ggf. einer plastischen Verformung unterliegt.

Die Rasteinrichtungen sind erfindungsgemäß durch wenigstens ein Paar zueinander passende Rastmittel gebildet, insbesondere durch einen Vorsprung und eine Aussparung, die in der montierten Endlage der Verbindungseinrichtung gegenseitig in Eingriff bringbar sind. Insbesondere kann der Vorsprung am Becher und die Aussparung am Becherträger angeordnet sein, oder umgekehrt. Der in die Aussparung jeweils eingreifende Vorsprung stellt ein einfaches und zuverlässiges Rastmittel dar, das eine Fehlbedienung weitest gehend ausschließt.

Vorzugsweise sind zwei Paar von Rastmitteln diametral gegenüber liegend angeordnet. Die möglichen Ausgestaltungen der Rasteinrichtungen sorgen für die gewünschte definierte Endlage des Bechers, so dass dieser weder zu fest noch zu locker in den Becherträger eingesetzt werden kann. Ein zu lockeres Einschrauben könnte zu einer Lockerung des Bechers bei den während des Betriebs auftretenden Vibrationen und damit zu einer Undichtigkeit führen. Ein zu festes Aufdrehen könnte eine Verquetschung einer Dichtung mit sich bringen. Hierdurch kann die Dichtung beschädigt werden, so dass ebenfalls eine Undichtigkeit auftreten kann. Zudem kann ein zu fest eingedrehter Becher unter Umständen bei auftretenden Temperaturunterschieden zwischen den Gewindeteilen nicht mehr von Hand gelöst werden. Das Vorhandensein jeweils wenigstens zweier Vorsrpünge bzw. Aussparungen sorgt für eine gleichmäßige Kräfteverteilung und Zentrierung des Bechers im Schüsselträger.

Die Verbindungseinrichtung ist vorzugsweise als eine Gewindeverbindung oder eine Bajonettverbindung ausgebildet. Die Rasteinrichtung kann somit in der montierten Endlage der Verbindungseinrichtung in Eingriff gebracht werden. Es kann am Becherträger eine weitere Verbindungseinrichtung, bevorzugt eine Bajonetteinrichtung, zum Montieren des Becherträgers auf der Mischzerkleinerungsvorrichtung vorgesehen sein. Durch das Vorsehen der Rasteinrichtungen ist die Verbindungseinrichtung zwischen Becher und Becherträger vorzugsweise leichter lösbar als die weitere Verbindungseinrichtung zwischen dem Becherträger und der Mischzerkleinerungsvorrichtung.

Zwischen dem Becher und dem Becherträger kann weiterhin ein Lagerschild angeordnet sein, durch das eine Werkzeugwelle gelagert ist. Das Lagerschild kann zwischen Becher und Becherträger fixiert und zentriert sein, so dass die Werkzeugwelle eine definierte Drehachse und Höhenlage aufweist.

Weitere Aspekte und vorteilhafte Weiterbildungen der Erfindung ergeben sich aus den abhängigen Ansprüchen sowie aus der nachfolgenden Figurenbeschreibung.

Nachstehend wird die Erfindung anhand eines Ausführungsbeispiel unter Bezugnahme auf die beiliegenden Zeichnungen näher erläutert. Dabei zeigt:
- Figur 1: eine schematische Schnittdarstellung einer erfindungsgemäßen Mischzerkleinerungsvorrichtung und
- Figur 2: eine Explosionsdarstellung eines abgenommenen Bechers der Mischerzerkleinerungsvorrichtung entsprechend Figur 1.

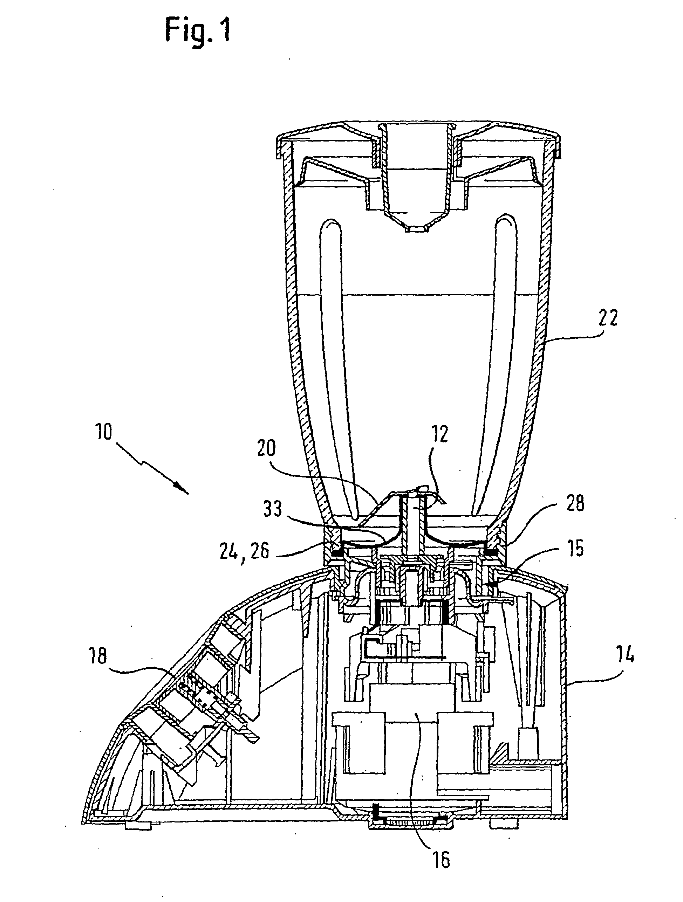

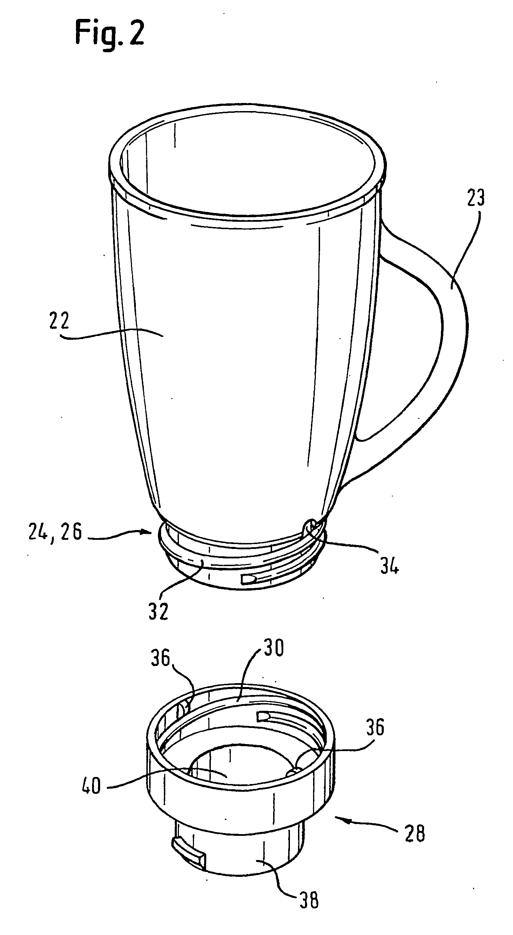

Figur 1 zeigt eine erfindungsgemäße Mischzerkleinerungsvorrichtung 10 in einer schematischen Schnittdarstellung. Die Mischzerkleinerungsvorrichtung 10 weist eine rotierende Werkzeugwelle 12 auf und umfasst ein Gehäuse 14 mit einer darin angeordneten Antriebsvorrichtung, vorzugsweise einem elektrischen Antriebsmotor 16, sowie einer Betätigungseinrichtung 18 zur Betätigung der Mischzerkleinerungsvorrichtung 10. Die Werkzeugwelle 12 mit daran angeordneten Messern 20 weist eine vertikale Drehachse auf und ragt in einen Becher 22, der in eine Aufnahme 15 auf einer Oberseite des Gehäuses 14 aufgesetzt ist und bei Bedarf hiervon abgenommen werden kann. Der Becher 22 kann ggf. einen seitlichen Griff 23 aufweisen (vgl. Figur 2).

Der Becher 22 weist eine offene Unterseite 24 mit einem ringförmigen Becherfuß 26 auf, der eine zylindrische Außenmantelfläche mit einem darauf befindlichen Außengewinde 32 oder einer Bajonettpassung o. dgl. aufweist. Diese korrespondiert mit einem entsprechenden Innengewinde 30 bzw. einer Gegenpassung einer Bajonettverriegelung eines Becherträgers 28. Der Becherträger 28 kann gemeinsam mit dem Becher 22 vom Gehäuse 14 abgenommen werden und dichtet in diesem Fall die offene Unterseite 24 des Bechers 22 ab. Bei fest mit dem Becherträger 28 verbundenem Becher 22 bleibt die Werkzeugwelle 12 auch bei abgenommenem Becher 22 mit diesem verbunden, da die Werkzeugwelle 12 in einem Lagerschild 30 gelagert ist, der zwischen Becher 22 und Becherträger 28 fixiert ist.

Figur 2 verdeutlicht den vom Becherträger 28 abgenommenen Becher 22, der sich nach unten hin verjüngt und am Becherfuß 26 das Außengewinde 32 trägt. Die Unterseite 24 des Bechers 22 ist offen, so dass bei aufgesetztem Becher 22 die aus einer Öffnung 40 des Becherträgers 28 heraus ragende Werkzeugwelle (Figur 1) innerhalb eines unteren Abschnittes des Bechers 22 angeordnet ist.

Der Becherträger 28 weist ein zum Außengewinde 32 passendes Innengewinde 30 auf, so dass der Becherfuß 26 mit dem Becherträger 28 verschraubt werden kann. Am Grund des Innengewindes 30 ist vorzugsweise ein Dichtring (nicht dargestellt) vorgesehen, der für die zuverlässige Abdichtung des Bechers 22 während des Betriebs sorgt. Alternativ hierzu kann auch ein Bajonettverschluss vorgesehen sein, der ebenfalls eine dichte Verbindung ermöglicht. Ein unterhalb des Gewindebereichs des Becherträgers 28 vorgesehener Einsatz 38 dient zum Einsetzen in die Aufnahme 15 des Gehäuses 14.

An einer oberen Kante innerhalb des Innengewindes 30 des Becherträgers 28 sind zwei gegenüber liegend angeordnete Vorsprünge 36 erkennbar, die aus dem Innengewinde 30 ragen und die Teil einer Rasteinrichtung zur Definition einer Endlage des eingeschraubten Bechers 22 sind. Der Becher 22 weist an einer oberen Kante seines Außengewindes 32 am Becherfuß 26 hierzu passende Aussparungen 34 auf, die mit den Vorsprüngen 36 zusammen wirken, sobald der Becher 22 vollständig eingeschraubt ist. Hierbei greifen die Vorsprünge 36 in die Aussparungen 34 ein und verhindern ein Weiterdrehen des Bechers 22 über die Endlage hinaus.

Anstatt der gezeigten jeweils zwei Vorsprünge 36 und Aussparungen 34 können auch jeweils nur eine Aussparung und ein Vorsprung vorgesehen sein. Ebenso können jedoch auch drei oder mehr Paare von zusammen wirkenden Vorsprüngen und Aussparungen vorgesehen sein. Diese können jeweils an den oberen oder unteren Kanten des Außen- bzw. Innengewindes angeordnet sein, so dass während des Einschraubens keine Rastung erfolgt, sondern erst unmittelbar beim Erreichen der Endlage. Anstatt der gezeigten Anordnung mit den am Innengewinde 30 vorgesehenen Vorsprüngen 36 können dort auch die Aussparungen 34 vorgesehen sein. Hierbei sind die Vorsprünge 36 am Außengewinde 32 des Gehäusefußes vorgesehen.

Vorzugsweise ist die aufzubringende Kraft zum Lösen der Rastverbindung zwischen Becher 22 und Becherträger 28 kleiner als die zum Lösen des Einsatzes 38 aus der Aufnahme 15 des Gehäuses 14, so dass grundsätzlich erst diese Verbindung getrennt wird.

Eine Kupplung zwischen Abtriebswelle des Antriebsmotors 16 und Werkzeugwelle 12 kann vermeiden, dass die im Becherträger 28 offen liegende Werkzeugwelle 12 noch mit dem Antriebsmotor 16 gekoppelt ist, was zu Verletzungen führen kann, wenn dieser noch nicht abgeschaltet ist oder versehentlich eingeschaltet wird.

## Patentansprüche

1. Becheranordnung für eine Mischzerkleinerungsvorrichtung (10) mit einem Becher (22) und einem Becherträger (28), der über eine Verbindungseinrichtung, bevorzugt eine Gewindeverbindung, am Becher (22) montierbar ist, und bei montiertem Becher (22) zwischen dem Becher (22) und dem Becherträger (28) eine Rasteinrichtung vorgesehen ist, mit der die Verbindungseinrichtung in ihrer Montageposition verrastbar ist, **dadurch gekennzeichnet, dass** die Rasteinrichtung wenigstens ein Paar zueinander passende Rastmittel, wie einen Vorsprung (36) und eine Aussparung (34) haben, die in der montierten Endlage der Verbindungseinrichtung gegenseitig in Eingriff bringbar sind, derart, dass ein Weiterdrehen des Bechers (22) über die Endlage hinaus verhindert ist.

2. Becheranordnung nach Anspruch 1, **dadurch gekennzeichnet, dass** der Vorsprung (36) am Becher (22) und die Aussparung (34) am Becherträger (28) angeordnet ist.

3. Becheranordnung nach Anspruch 1, **dadurch gekennzeichnet, dass** der Vorsprung (36) am Becherträger (28) und die Aussparung (34) am Becher (22) vorgesehen ist.

4. Becheranordnung nach einem der Ansprüche 1 bis 3, **dadurch gekennzeichnet, dass** der Vorsprung (36) und die Aussparung (34) jeweils an den oberen oder unteren Kanten des Außen (32)- bzw. Innengewindes (30) angeordnet sind, so dass während des Einschraubens keine Rastung erfolgt, sondern erst unmittelbar beim Erreichen der Endlage.

5. Becheranordnung nach einem der Ansprüche 1 bis 4, **dadurch gekennzeichnet, dass** zwei Paar von Rastmitteln bevorzugt diametral gegenüber liegend angeordnet sind.

6. Becheranordnung nach einem der Ansprüche 1 bis 5, **dadurch gekennzeichnet, dass** der Becherträger (28) eine weitere Verbindungseinrichtung, bevorzugt eine Bajonettverbindung, zum Montieren des Becherträgers (28) auf der Mischzerkleinerungsvorrichtung (10) hat, und dass durch das Vorsehen der Rasteinrichtung die Verbindungseinrichtung zwischen Becher (22) und Becherträger (28) leichter lösbar ist als die weitere Verbindungseinrichtung zwischen dem Becherträger (28) und der Mischzerkleinerungsvorrichtung (10).

## Claims

1. Pitcher arrangement for a blending device (10), comprising a pitcher (22) and a pitcher support (28) which can be mounted on the pitcher (22) by way of a connecting device, preferably a threaded connection, and when the pitcher (22) is mounted a detent device, by which the connecting device can be detented in its mounted position, is provided between the pitcher (22) and the pitcher support (28), **characterised in that** the detent device has at least one pair of complementary detent means, such as a projection (36) and a cut-out (34), which can be brought into mutual engagement in the mounted end position of the connecting device in such a manner that further rotation of the pitcher (22) beyond the end position is prevented.

2. Pitcher arrangement according to claim 1, **characterised in that** the projection (36) is arranged at the pitcher (22) and the cut-out (34) at the pitcher support (28).

3. Pitcher arrangement according to claim 1, **characterised in that** the projection (36) is provided at the pitcher support (28) and the cut-out (34) at the pitcher (22).

4. Pitcher arrangement according to any one of claims 1 to 3, **characterised in that** the projection (36) and the cut-out (34) are respectively arranged at the upper or lower edges of the external thread (32) or internal thread (30) so that detenting takes place not during the screwing-in, but only directly on reaching the end position.

5. Pitcher arrangement according to any one of claims 1 to 4, **characterised in that** two pairs of detent means are arranged to be disposed preferably diametrically opposite.

6. Pitcher arrangement according to any one of claims 1 to 5, **characterised in that** the pitcher support (28) has a further connecting device, preferably a bayonet connection, for mounting the pitcher support (28) on the blending device (10) and that through the provision of the detent device the connecting device between pitcher (22) and pitcher support (28) can be more easily detached than the further connecting device between the pitcher support (28) and the blending device (10).

## Revendications

1. Système de récipient pour un dispositif mélangeur-broyeur (10), comprenant un récipient (22) et un support de récipient (28) pouvant être monté sur le récipient (22) par l'intermédiaire d'un dispositif de raccordement, de préférence un raccordement fileté, et dans lequel, lorsque le récipient (22) est monté, un dispositif d'encliquetage est prévu entre le récipient (22) et le support de récipient (28), au moyen duquel dispositif d'encliquetage le dispositif de raccordement est encliquetable dans sa position de montage, **caractérisé en ce que** le dispositif d'encliquetage a au moins une paire de moyens d'encliquetage correspondant les uns aux autres, tels qu'une saillie (36) et un évidement (34), qui, en position terminale montée du dispositif de raccordement, peuvent être mis mutuellement en prise de telle manière qu'un vissage supplémentaire du récipient (22) au-delà de la position terminale est empêché.

2. Système de récipient selon la revendication 1, **caractérisé en ce que** la saillie (36) est disposée sur le récipient (22) et l'évidement (34) sur le support de récipient (28).

3. Système de récipient selon la revendication 1, **caractérisé en ce que** la saillie (36) est prévue sur le support de récipient (28) et l'évidement (34) sur le récipient (22).

4. Système de récipient selon l'une quelconque des revendications 1 à 3, **caractérisé en ce que** la saillie (36) et l'évidement (34) sont respectivement disposés sur les bords supérieurs ou inférieurs du filet extérieur (32) resp. du filet intérieur (30), de sorte qu'il n'y a pas d'encliquetage pendant le vissage mais seulement immédiatement lorsque la position terminale est atteinte.

5. Système de récipient selon l'une quelconque des revendications 1 à 4, **caractérisé en ce que** deux paires de moyens d'encliquetage sont disposées de préférence de manière diamétralement opposée.

6. Système de récipient selon l'une quelconque des revendications 1 à 5, **caractérisé en ce que** le support de récipient (28) a un dispositif de raccordement supplémentaire, de préférence un raccordement à baïonnette, pour monter le support de récipient (28) sur le dispositif mélangeur-broyeur (10), et **en ce que**, du fait que le dispositif d'encliquetage est prévu, le dispositif de raccordement entre le récipient (22) et le support de récipient (28) est plus facilement détachable que le dispositif de raccordement supplémentaire entre le support de récipient (28) et le dispositif mélangeur-broyeur (10).
